# EUROPEAN PATENT SPECIFICATION

(11) **EP 3 322 171 B1**
(45) Date of publication and mention of the grant of the patent: **28.08.2019**
(21) Application number: 16821444.3
(22) Date of filing: 07.07.2016
(51) Int. Cl.: H04N 1/024, H04N 1/031, H04N 1/034

(54) **IMAGE-READING DEVICE AND INKJET RECORDING DEVICE**
BILDLESEVORRICHTUNG UND TINTENSTRAHLAUFZEICHNUNGSVORRICHTUNG
DISPOSITIF DE LECTURE D'IMAGE ET DISPOSITIF D'IMPRESSION À JET D'ENCRE

(30) Priority: 08.07.2015 JP 2015136621
(43) Date of publication of application: 16.05.2018
(73) Proprietor: Konica Minolta, Inc., Tokyo 100-7015 (JP)
(72) Inventor: KAWABE, Toru, Tokyo 100-7015 (JP)
(74) Representative: Fraser, Karen
(86) International application number: PCT/JP2016/070065
(87) International publication number: WO 2017/006975

(56) References cited:
- WO-A1-2014/196010
- JP-A- 2004 222 324
- JP-A- 2008 211 635
- JP-A- 2010 137 474
- JP-A- 2011 069 651
- US-A- 5 461 417
- US-A- 5 825 499
- US-A1- 2003 090 555
- US-A1- 2010 208 980
- US-A1- 2015 036 128

## Description

### TECHNICAL FIELD

The present invention relates to an image-reading device and an inkjet recording device.

### BACKGROUND ART

There have been conventionally inkjet recording devices which record images on recording media by ejecting ink from a plurality of nozzles of recording heads while moving the recording media and the recording heads relative to each other, the recording heads being provided with the plurality of nozzles ejecting ink. Some of the inkjet recording devices can determine whether ink is appropriately ejected to the recording media from the recording heads by reading predetermined test images which were recorded on the recording media with image-reading devices moving relative to the recording media.

As the image-reading devices, there is known an image-reading device which includes: a reading means that has a line sensor extending in a width direction crossing the direction of the relative movement between the image-reading device and the recording medium; and a light source that emits light to the recording medium, and the image-reading device detects reflected light at the recording medium of the light which was emitted from the light source with the reading means and reads an image in a reading range extending in the width direction in the recording medium (for example, Patent Document 1). Such an image-reading device can read the entire image which was recorded on the recording medium by performing the image reading operation repeatedly at an appropriate interval with respect to the recording medium moving relative to the image-reading device.

### PATENT DOCUMENT

Patent Document 1: Japanese Patent Application Laid Open
Publication No. 2011-69651

### DISCLOSURE OF THE INVENTION

### PROBLEMS TO BE SOLVED BY THE INVENTION

However, in the conventional image-reading devices, there has been a problem that image reading cannot be performed appropriately due to the density of the image which was recorded outside the reading range influencing the reading result of the reading range by the reading means since light which was emitted to the outside of the reading range in the recording medium and was diffusely reflected also enters the reading means.

An object of the present invention is to provide an image-reading device and an inkjet recording device which can read the image more appropriately.

### MEANS FOR SOLVING THE PROBLEM

The present invention is defined by the subject-matter of the appended claims.

### EFFECTS OF THE INVENTION

According to the present invention, there is an effect that image reading can be performed more appropriately.

### BRIEF DESCRIPTION OF DRAWINGS

[FIG. 1] This is a view showing a schematic configuration of an inkjet recording device which is an embodiment of the present invention.
[FIG. 2] This is a block diagram showing a main functional configuration of the inkjet recording device.
[FIG. 3A] This is a schematic perspective view of an image reading section facing a recording medium which is conveyed by a conveyance section.
[FIG. 3B] This is a schematic cross-sectional view of the image reading section along a plane which is perpendicular to the X direction.
[FIG. 3C] This is a schematic cross-sectional view showing an enlarged view of a part of FIG. 3B.
[FIG. 4] This is a schematic plan view showing a portion including a slit in a light-blocking part.
[FIG. 5] This is a view showing an example of a test image recorded on the recording medium.
[FIG. 6] This is a flowchart showing a control procedure of image correction parameter acquisition processing.
[FIG. 7] This is a flow chart showing a control procedure of image recording processing.
[FIG. 8] This is a schematic cross-sectional view of an image reading section according to a modification example.

### EMBODIMENTS FOR CARRYING OUT THE INVENTION

Hereinafter, an embodiment according to an image-reading device and an inkjet recording device of the present invention will be described with reference to the drawings.

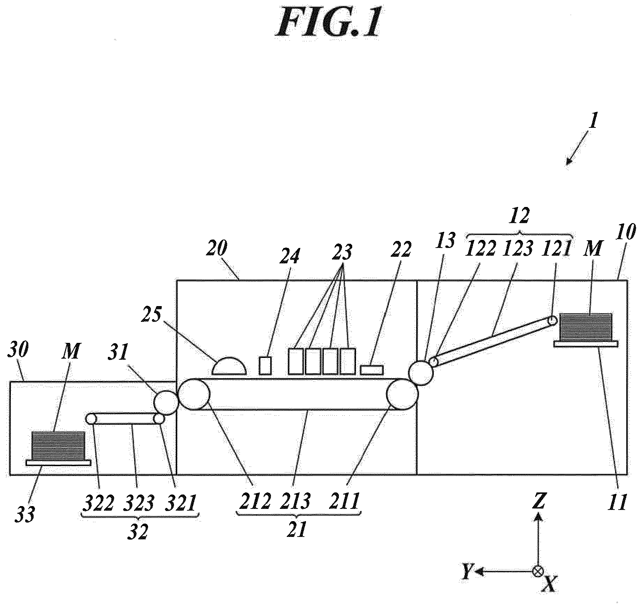

FIG. 1 is a view showing a schematic configuration of an inkjet recording device 1 which is an embodiment of the present invention.

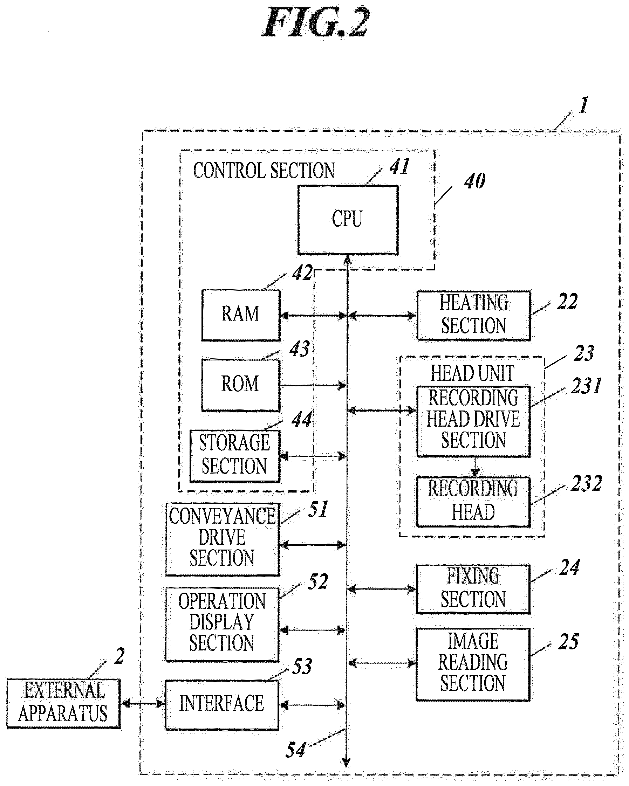

The inkjet recording device 1 includes a sheet feeding section 10, an image recording section 20, a sheet ejection section 30 and a control section 40 (FIG. 2). Under control by the control section 40, the inkjet recording device 1 conveys a recording medium M stored in the sheet feeding section 10 to the image recording section 20, records an image on the recording medium M with the image recording section 20 and conveys the recording medium M having the image recorded thereon to the sheet ejection section 30. In the embodiment, there is preferably used, as the recording medium M, a medium such as fabric and embossed paper having concavities and convexities on the surface.

The sheet feeding section 10 has a sheet feeding tray 11 which stores recording media M, a medium feeding section 12 which conveys a recording medium M from the sheet feeding tray 11 to the image recording section 20, and a passing drum 13.

The medium feeding section 12 includes a belt 123 in a circle the inside of which is supported by two rollers 121 and 122. The medium feeding section 12 conveys the recording medium M by rotating the rollers 121 and 122 while the recording medium M is placed on the belt 123.

The passing drum 13 passes the recording medium M which has been conveyed by the medium feeding section 12 to a conveyance section 21 (movement section) of the image recording section 20. The passing drum 13 is provided at a position between the medium feeding section 12 and the conveyance section 21, and holds and takes up an end of the recording medium M conveyed by the medium feeding section 12 to pass the recording medium M to the conveyance section 21. There may be provided a swing arm section which passes the recording medium M from the medium feeding section 12 to the passing drum 13 between the medium feeding section 12 and the passing drum 13.

The configuration of the sheet feeding section 10 is not limited to the above configuration, and may be a configuration in which the recording medium M is pulled out from a roller having the recording medium M wound thereon and the recording medium M is conveyed to the conveyance section 21, for example.

The image recording section 20 has the conveyance section 21, a heating section 22, head units 23 (recording section), a fixing section 24 and an image reading section 25. The image-reading device is configured by including the image reading section 25 from among the above sections. The image-reading device may include the conveyance section 21 in addition to the image reading section 25.

The conveyance section 21 includes a conveyance belt 213 (placement section) in a circle the inside of which is supported by two conveyance rollers 211 and 212 which rotate about rotation axes extending in the X direction of FIG. 1. The conveyance section 21 conveys the recording medium M in a movement direction of the conveyance belt 213 (conveyance direction; Y direction in FIG. 1) by the conveyance rollers 211 and 212 rotating to move the conveyance belt 213 in a state in which the recording medium M passed from the passing drum 13 is placed on the placement surface of the conveyance belt 213.

In the conveyance belt 213, the placement surface is configured by including a white member. The placement surface of the conveyance belt 213 may be painted white. Here, the white includes the color of the placement surface in a case where the brightness is not distinguished between the portion where the light transmitted through the recording medium M and reflected at the placement surface was detected and the portion where the light reflected at the surface of the recording medium M was detected in the image capturing data which was obtained by placing the recording medium M in a pure white on the placement surface and performing reading with the image reading section 25.

The heating section 22 heats the recording medium M which is placed on the placement surface of the conveyance belt 213. The heating section 22 has an infrared heater or the like, for example, and the infrared heater produces heat by electric conduction on the basis of a control signal output from the control section 40. The heating section 22 is provided near the placement surface of the conveyance belt 213 so as to be located upstream of the head units 23 in the conveyance direction of the recording medium M. The heat production of the heating section 22 is controlled by the control section 40 so that the recording medium M placed on the placement surface of the conveyance belt 213 and passing near the heating section 22 is at a temperature within a predetermined range.

The head units 23 record an image by ejecting ink to the recording medium M according to the rotation of the conveyance belt 213 on which the recording medium M is placed. The head units 23 are disposed so that the ink ejection surfaces face the conveyance belt 213 with a predetermined distance. In the inkjet recording device 1 in the embodiment, four head units 23 corresponding to ink of four colors of yellow (Y), magenta (M), cyan (C) and black (K) are disposed at predetermined intervals in the order of Y, M, C and K colors from the upstream side in the conveyance direction of the recording medium M.

Each of the head units 23 includes: a plurality of (for example, four) recording heads 232 (FIG. 2) in each of which a plurality of recording elements is arranged in a direction (direction orthogonal to the conveyance direction, that is, X direction in the embodiment) crossing the conveyance direction of the recording medium M; and a recording head drive section 231 (FIG. 2) which drives the recording heads 232.

The recording head drive section 231 has a drive circuit which outputs a voltage signal of a drive waveform corresponding to image data to each of the recording heads 232 and a drive control circuit which outputs the image data to the drive circuit at an appropriate timing.

Each of the recording elements included in the recording head 232 includes a pressure room for pooling ink, a piezoelectric element provided on the wall surface of the pressure room and a nozzle. When the voltage signal of the drive waveform causing the deformation operation of the piezoelectric element is applied from the drive circuit of the recording head drive section 231 to the piezoelectric element, the pressure in the pressure room changes according to the voltage signal, and ink is ejected from the nozzle communicated with the pressure room.

The arrangement range in the X direction of the recording elements included in the head units 23 cover the width in the X direction of the region to record an image in the recording medium M which is conveyed by the conveyance section 21, and the head units 23 are used with their positions fixed with respect to the conveyance section 21 when the image is recorded. That is, the inkjet recording device 1 is an inkjet recording device of the single-pass system.

As the ink ejected from the recording heads 232, there are used inks having properties of changing the phase to gel or sol according to the temperature and becoming hardened by emission of energy rays such as ultraviolet rays.

Each of the head units 23 includes an ink heating section not shown in the drawings. The ink heating section operates under control by the control section 40 and heats the ink which is pooled in the head unit 23 to a temperature changing the phase to sol. The recording heads 232 eject ink which was turned to sol by heating.

The fixing section 24 has a light emitting section disposed over the width in the X direction of the conveyance belt 213, and emits energy rays such as ultraviolet rays from the light emitting section to the recording medium M which is placed on the conveyance belt 213, and hardens and fixes the ink which was ejected onto the recording medium M. The light emitting section of the fixing section 24 is disposed downstream of the head units 23 in the conveyance direction so as to face the conveyance belt 213.

The image reading section 25 is disposed at a position downstream in the conveyance direction of the ink fixing position by the fixing section 24 with respect to the recording medium M so as to face the conveyance belt 213, reads, in a predetermined reading range, the image recorded on the recording medium M which is conveyed by the conveyance belt 213, and outputs two-dimensional image capturing data of the image. The detailed configuration and operation of the image reading section 25 will be described later.

The sheet ejection section 30 has a passing drum 31, a delivery section 32 and a sheet ejection tray 33.

The passing drum 31 receives the recording medium M which was conveyed by the conveyance section 21 downstream in the conveyance direction of the image reading section 25, and passes the recording medium M to the delivery section 32. The mechanism of passing the recording medium M from the conveyance section 21 to the delivery section 32 is not limited to the mechanism using the passing drum 31, and other known mechanisms may be used.

The delivery section 32 has the belt 323 in a circle the inside of which is supported by two conveyance rollers 321 and 322. The delivery section 32 conveys, with the belt 323, the recording medium M which was passed from the conveyance section 21 onto the belt 323 by the passing drum 31, and transmits the recording medium M to the sheet ejection tray 33.

The sheet ejection tray 33 is a plate-like member on which the recoding medium M conveyed by the delivery section 32 is placed.

The configuration of the sheet ejection section 30 is not limited to the above configuration. For example, in a case of a configuration in which the sheet feeding section 10 pulls out the recording medium M from a roller to convey the recording medium M, the sheet ejection section 30 may have a configuration including a wind-up section for winding the recording medium M onto the roller.

FIG. 2 is a block diagram showing a main functional configuration of the inkjet recording device 1.

The inkjet recording device 1 includes the control section 40 which includes a CPU 41 (Central Processing Unit)(recording control section, reading control section and correction section), a RAM 42 (Random Access Memory), a ROM 43 (Read Only Memory) and a storage section 44, a heating section 22, a recording head drive section 231 which drives the recording heads 232 in the head unit 23, a fixing section 24, an image reading section 25, a conveyance drive section 51, an operation display section 52, an interface 53, a bus 54 and such like.

The CPU 41 performs various types of calculation processing by reading various control programs and setting data stored in the ROM 43, stores them in the RAM 42 and executing the programs. The CPU 41 thereby integrally controls the entire operation of the inkjet recording device 1. For example, the CPU 41 operates the sheet feeding section 10, the image recording section 20 and the sheet ejection section 30 to record an image on the recording medium M on the basis of the image data stored in the storage section 44.

The RAM 42 provides working memory space to the CPU 41, and stores temporal data. The RAM 42 also stores an image correction parameter which is acquired by after-mentioned image correction parameter acquisition processing. The RAM 42 may include a non-volatile memory.

The ROM 43 stores various types of control programs executed by the CPU 41, setting data and such like. The programs include, for example, an image correction parameter acquisition program for acquiring the image correction parameter used in correction of the image data and an image recording program for correcting the image data and recording an image on the recording medium M by using the corrected image data. A rewritable non-volatile memory such as an EEPROM (Electrically Erasable Programmable Read Only Memory) and a flash memory may be used instead of the ROM 43.

The storage section 44 is configured by including a DRAM (Dynamic Random Access Memory) or the like, and stores image data input from an external apparatus 2 via the interface 53, and the image capturing data by the image reading section 25 of the image recorded on the recording medium M.

The conveyance drive section 51 outputs a drive signal to a motor for operating the conveyance rollers 211 and 212 of the conveyance section 21 on the basis of the control signal output from the CPU 41 to rotate the conveyance rollers 211 and 212 at a predetermined speed and timing. The conveyance drive section 51 outputs a drive signal to a motor for operating the medium feeding section 12, the passing drums 13 and 31 and the delivery section 32 on the basis of the control signal output from the CPU 41 to perform feeding of the recording medium M to the conveyance section 21 and ejection of the recording medium M from the conveyance section 21.

The recording head drive section 231 causes the recording heads 232 to eject ink on the basis of the control signal and the image data which were output from the CPU 41. In detail, when the control signal and the image data are output from the CPU 41, the drive control circuit of the recording head drive section 231 causes the piezoelectric elements of the recording elements of the recording heads 232 to output voltage signals of the drive waveform by the drive circuit, and causes the recording heads 232 to perform ejection operation of ejecting ink for the amount corresponding to the image data from the nozzles of the recording elements or non-ejection operation of not ejecting ink which is executed in a case where the image data corresponds to non-ejection of the ink and during the interval between a plurality of image recording operations.

The operation display section 52 includes: a display device such as a liquid crystal display and an organic EL display; and an input device such as operation keys and a touch panel disposed so as to be superposed on the screen of the display device. The operation display section 52 displays various types of information on the display device and converts the input operation to the input device by a user into an operation signal to output the signal to the control section 40.

The interface 53 is a means for performing data transmission/reception with the external apparatus 2, and formed by any one or a combination of various serial interfaces and various parallel interfaces, for example.

The external apparatus 2 is a personal computer, for example, and outputs an image recording instruction, image data and such like to the control section 40 via the interface 53.

Next, the detailed configuration of the image reading section 25 will be described.

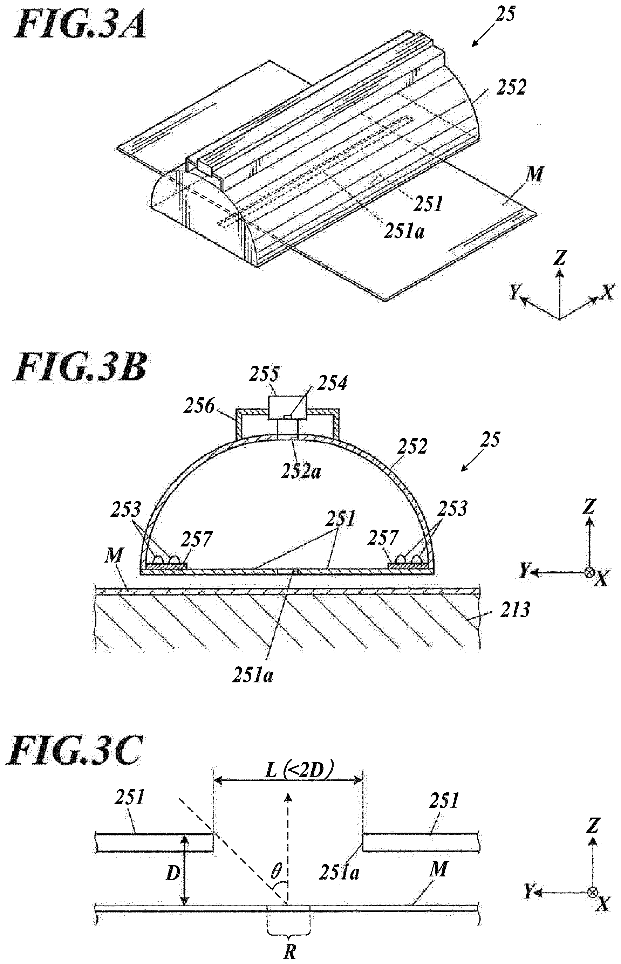

FIGS. 3A to 3C are schematic views showing the configuration of the image reading section 25. FIG. 3A is a schematic perspective view of the image reading section 25 in a state of facing the recording medium M which is conveyed by the conveyance section 21. FIG. 3B is a schematic cross-sectional view of the image reading section 25 on the plane perpendicular to the X direction. FIG. 3C is a schematic cross-sectional view showing a partial enlarged view of FIG. 3B.

The image reading section 25 includes a light-blocking part 251, a reflection plate 252 (light reflection section), light sources 253 and a line sensor 255 (reading means) which has an image capturing element 254 (light detection element).

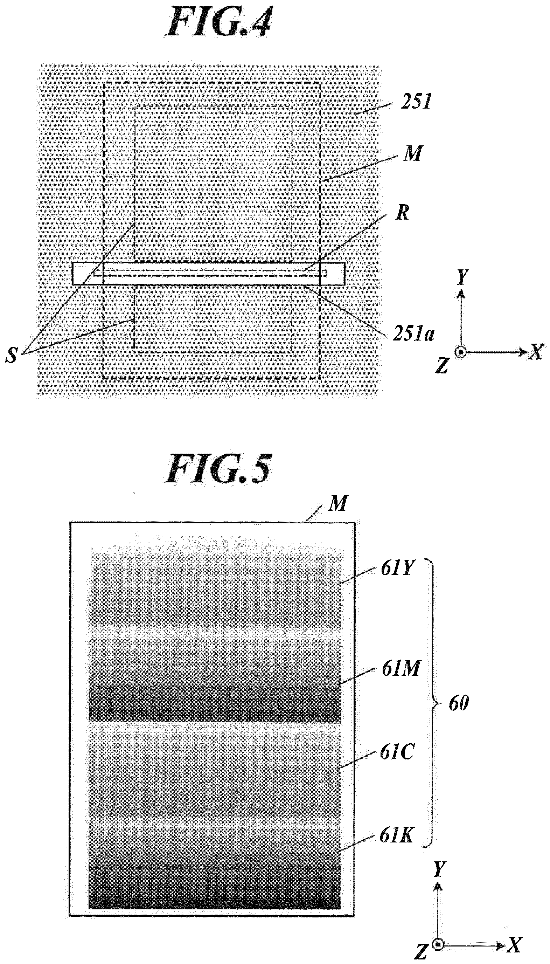

The light-blocking part 251 is a rectangular plate-like member which is placed in parallel to the placement surface of the conveyance belt 213. At the central portion in the Y direction of the light-blocking part 251, there is provided a slit 251a extending in the width direction (X direction in the embodiment) crossing the conveyance direction. The slit 251a is provided in a region covering a reading range R (FIGS. 3C and 4) in which image reading is performed by the image reading section 25 when seen from the direction (Z direction) perpendicular to the plane of the light-blocking part 251. The slit 251a is provided over the recording possible width of the image in the extending direction of the slit 251a in the recording medium M. In the light-blocking part 251, the central portion in the Y direction of the slit 251a and the central portion in the Y direction of the reading range R are located so as to match each other. The light-blocking part 251 allows the light entering the slit 251a to pass through, and blocks light which enters the surface other than the slit 251a. In the light-blocking part 251, the surface (hereinafter, referred to as the upper surface) which is opposite to the surface facing the recording medium M is a light diffuse reflection surface having a property of diffusely reflect the incident light. The light diffuse reflection surface may be formed by a member having a light blocking property of the light-blocking part 251, or may be formed by a light reflection member in an embodiment in which the light-blocking part 251 includes a member having a light blocking property and the light reflection member disposed so as to be superposed on the member.

As shown in FIG. 3C, in the light-blocking part 251, the slit 251a is provided so as to satisfy the relationship of L<2D in a case where the width in the Y direction of the slit 251a is L and the distance between the recording medium M facing the light-blocking part 251 and the end of the slit 251a in the light-blocking part 251 (upper surface of the light-blocking part 251 in the embodiment) is D, the end being on the side opposite to the side facing the recording medium M. The positional relationship with the placement surface of the conveyance belt 213 is adjusted. Thus, the incident angle θ of light passing through the slit 251a and entering the central portion in the Y direction in the reading range R is less than 45 degrees. The width L in the Y direction of the slit 251a is in a range of 2mm or more and 10mm or less, for example.

As shown in FIG. 3A, the reflection plate 252 has a half cylindrical shape obtained by cutting the member in the cylindrical shape by a plane passing through the axis, and the portion corresponding to the cut position is attached to the light-blocking part 251. As shown in FIG. 3B, in the reflection plate 252, an inner surface in the cross section perpendicular to the X direction is arched (concave). The inner surface (light reflection surface) of the reflection plate 252 is a light diffuse reflection surface similarly to the upper surface of the light-blocking part 251. The opening 252a (light passing section) extending in the X direction is provided at the position lying over the slit 251a of the light-blocking part 251 when seen from the Z direction in the reflection plate 252.

The shape of the reflection plate 252 is not limited to the above, and may be a shape obtained by cutting a member in a cylindrical surface shape with a plane not passing through the axis along the axis direction, or may be a shape such that the cross section at the plane perpendicular to the X direction is a quadric curve.

Each of the light sources 253 is an LED (Light Emitting Diode) which is attached on substrates 257 extending in the X direction and disposed on the both ends in the Y direction of the light-blocking part 251. A plurality of (for example, ten) light sources 253 is arranged in the X direction to make a line, and two lines of the light sources 253 are disposed on each of the substrates 257.

The light source 253 emits light toward the inner surface of the reflection plate 252. In the light which was emitted from the light source 253 and diffusely reflected at the inner surface of the reflection plate 252, a part of the light goes though the slit 251a of the light-blocking part 251 and enters the surface of the recording medium M on the conveyance belt 213, and another part of the light is multiply reflected at the upper surface of the light-blocking part 251 and the inner surface of the reflection plate 252. A part of the multiply-reflected light also passes through the slit 251a and enters the surface of the recording medium M.

The arrangement location of the light sources 253 is not limited to the above, and the positions of the light sources 253 can be appropriately selected from among positions which enable light emission toward the inner surface of the reflection plate 252.

The line sensor 255 is attached to a position in the outer surface of the reflection plate 252, the position lying over the opening 252a when seen from the Z direction. The line sensor 255 includes a plurality of image capturing elements 254 arranged at predetermined arrangement intervals in the X direction. Each of the image capturing elements 254 receives a part of the light which passed through the slit 251a and the opening 252a from among the reflected light of the light that was emitted from the light source 253, passed through the slit 251a and entered the surface of the recording medium M, and the image capturing element 254 detects the intensity of the received light.

As the image capturing element 254, there can be used a CMOS (Complementary Metal Oxide Semiconductor) sensor, a CCD (Charge Coupled Device) sensor or the like including a photodiode as a photoelectric conversion element, for example. The line sensor 255 also includes a circuit which converts the analog signal output from the image capturing element 254 into image capturing data of a digital signal and outputs the data to the control section 40.

In the embodiment, there is used a line sensor 255 which has a space resolution smaller than the magnitude of concavities and convexities in the surface of the recording medium M in the plane direction parallel to the surface. Here, the magnitude of concavities and convexities in the surface of the recording medium M is represented by distances or an average value thereof, each of the distances being a distance between a center of one concavity in the concavities and convexities and a center of the convexity closest to the concavity in a plane direction of the recording medium M. For example, the center of a concavity can be determined to be a point which is lowest in the direction perpendicular to the plane direction in the concavity, and the center of the convexity can be determined to be a point which is highest in the direction perpendicular to the plane direction in the convexity. In the embodiment, the resolution in the X direction and the Y direction of the image capturing data which is output from the line sensor 255 is 540dpi.

The line sensor 255 detects the intensity of incident light at appropriate intervals corresponding to the conveyance speed of the recording medium M and the resolution of the line sensor 255 in a state in which the recording medium M conveyed by the conveyance section 21 is passing the reading range R. Thus, the line sensor 255 reads the image recorded on the recording medium M in the order of conveyance of the recording medium M to the reading range R and outputs the image capturing data of the entire image to the control section 40.

The conveyance section 21 may convey the recording medium M so that the recording medium M temporarily stops at the timing of image capturing by the line sensor 255. Such a recording medium M in a state of being temporarily stopped may be included in the recording medium M conveyed by the conveyance section 21.

FIG. 4 is a schematic plan view showing a portion including the slit 251a in the light-blocking part 251. FIG. 4 shows a state in which the recording medium M is passing the reading range R and a part of the recording medium M is exposed through the slit 251a.

In the image reading section 25 in the embodiment, the light which was diffusely reflected by the reflection plate 252 and emitted toward the recording medium M is blocked by the light-blocking part 251 and thus does not enter the recording medium M except for the light which enters the slit 251a. Thus, most of the light from the light sources 253 does not enter the region S which is a region in the image formation possible range of the recording medium M excluding the range of providing the slit 251a. Even if a part of the light from the light sources 253 enters the region S, most of the light does not enter the line sensor 255. Thus, since the reading result of the image in the reading range R by the line sensor 255 is not influenced by the density of the image formed in the region S, image reading can be performed appropriately. Such effect by the light-blocking part 251 is larger as the width L in the Y direction of the slit 251a is smaller.

Next, the correction operation of the image data in the inkjet recording device 1 will be described.

Though it is desirable that the amounts of ink which are ejected from the respective recording heads 232 of the head unit 23 on the basis of the pixel data of a same gradation value in the image data are uniform, the amounts possibly vary due to the difference in property of the piezoelectric element of each of the recording elements, and such like. In this case, there is a problem that density irregularities occur in the recorded image even when the image is recorded on the recording medium M on the basis of image data (solid image data) which is formed of pixel data of uniform gradation values.

Thus, in the inkjet recording device 1 in the embodiment, the head unit 23 records an appropriate predetermined test image according to the test on the recording medium M, and the image data is corrected so as to overcome the above density irregularities on the basis of the reading result of the test image by the image reading section 25.

FIG. 5 is a view showing an example of a test image 60 recorded on the recording medium M. The test image 60 is recorded by recording heads 232 of the head units 23 corresponding to the respective colors of Y, M, C and K, and includes gradation patterns 61Y, 61M, 61C and 61K (hereinafter, also simply referred to as gradation patterns 61) which are disposed in order in the Y direction. The gradation patterns 61 are images which are formed by gradually increasing or decreasing the amounts of ink ejected from the nozzles of the recording heads 232 in accordance with the conveyance of the recording medium M. By the gradation patterns 61, it is possible to confirm the reproducibility of shading of colors by large/small amounts of the ink ejected onto the recording medium M.

The specific embodiments such as the positional relationship of the gradation patterns 61 in the recording medium M can be appropriately changed.

Hereinafter, image correction parameter acquisition processing and image recording processing will be described, the image correction parameter acquisition processing being processing of acquiring image correction parameters which are used when correcting image data of an image to be recorded by the inkjet recording device 1, and the image recording processing being processing of recording the image by correcting the image data.

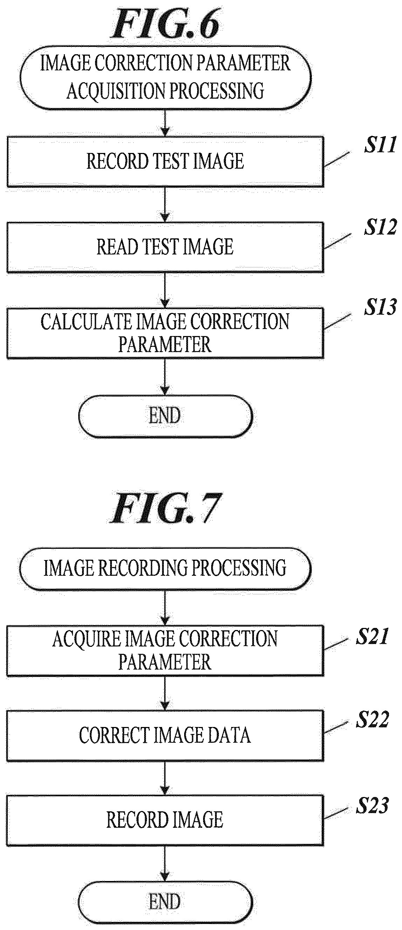

FIG. 6 is a flowchart showing a control procedure of the image correction parameter acquisition processing.

When the image correction parameter acquisition processing is started, the CPU 41 operates the sections in the sheet feeding section 10 and the image recording section 20 on the basis of predetermined test image data, and causes the head units 23 to eject ink to the recording medium M which is conveyed by the conveyance section 21 and to record the test image (step S11). In detail, the CPU 41 outputs a control signal to the conveyance drive section 51 to cause the medium feeding section 12 and the passing drum 13 to place the recording medium M on the placement surface of the conveyance belt 213, and rotates the conveyance belt 213 to convey the recording medium M. The CPU 41 then outputs the test image data and a control signal to the recording head drive section 231 to cause the recording head drive section 231 to output a voltage signal of the drive waveform to the recording heads 232 at an appropriate timing corresponding to the movement of the conveyance belt 213, and thereby causes the head units 23 to eject ink from nozzles onto the recording medium M conveyed by the conveyance section 21 to record the test image on the recording medium M.

The CPU 41 causes the image reading section 25 to repeatedly read the test image of the recording medium M at appropriate intervals while the conveyance section 21 conveys the recording medium M, and the CPU 41 acquires the image capturing data of the test image and stores the image capturing data in the storage section 44 (step S12). The recording medium M for which the test image was captured is conveyed to the sheet ejection section 30 under control by the CPU 41.

The CPU 41 analyzes the image capturing data which was obtained in step S12 and calculates the image correction parameter for correcting the image data of the image to be recorded by the inkjet recording device 1 (step S13). That is, the CPU 41 acquires the density distribution in the Y direction of each of the gradation patterns 61 included in the image capturing data for each portion corresponding to each of the recording heads 232, and acquires the image correction parameter for correcting deviation of the density distribution from the predetermined density distribution. For example, the CPU 41 acquires a gamma value from the density distribution in the Y direction of each of the gradation patterns 61, and acquires the gamma value or the ratio between the gamma value and the gamma value corresponding to the predetermined density distribution as the image correction parameter for each portion corresponding to each of the recording heads 232.

The CPU 41 stores data regarding the obtained image correction parameter in the RAM 42 and ends the image correction parameter acquisition processing.

Next, image recording processing which is executed in the inkjet recording device 1 will be described. In the image recording processing, the image data is corrected by using the image correction parameters which were acquired in the image correction parameter acquisition processing, and the image recording on the recording medium M is performed by using this image data.

FIG. 7 is a flowchart showing a control procedure of the image recording processing.

The CPU 41 acquires the image correction parameters which were stored in the RAM 42 in step S13 (step S21).

The CPU 41 corrects the image data of the image to be recorded by the inkjet recording device 1 by using the acquired image correction parameters (step S22). The CPU 41 performs gamma correction of the image data for the portion corresponding to each of the recording heads 232 by using the image correction parameter. In detail, the CPU 41 corrects the gradation value of the image data on the basis of the gamma value (or the ratio between the gamma value and the gamma value corresponding to the predetermined density distribution) indicated by the image correction parameter so that the gamma value of the image recorded on the recording medium M is a predetermined value.

The CPU 41 stores the corrected image data in the storage section 44.

The CPU 41 causes the head units 23 to record the image based on the corrected image data while causing the conveyance section 21 to convey the recording medium M (step S23). Thereby, an image of a predetermined gamma value suppressing the density irregularities for each of the recording heads 232 is recorded on the recording medium M. The operations of the respective sections in this step S23 are similar to those in step S11 except for the image data which is used.

When the processing of step S23 is finished, the CPU 41 ends the image recording processing.

Though the above description uses an example of performing gamma correction for each of the portions corresponding to the recording heads 232 of the image data, instead of this, there may be corrected gradation values of image data corresponding to the recording heads 232 other than the image data corresponding to one recording head 232 as a reference so that brightness is uniform on the basis of the irregularities in brightness in the X direction in the image capturing data of the gradation patterns 61 in FIG. 5, for example.

As described above, the image reading section 25 in the embodiment is an image reading section 25 for reading an image by moving a recording medium M and a reading range R relative to each other, the recording medium M having the image recorded thereon and the reading range R being a range in which a part of the image is read, and the image reading section 25 includes a light source 253, a light-blocking part 251 which blocks light that was emitted from the light source 253 and goes toward the recording medium M, and a line sensor 255 which reads the image that was recorded on the recording medium M by detecting light that passed through a slit 251a provided in the light-blocking part 251 from among reflection light of light that was emitted from the light source 253, passed through the slit 251a and entered the reading range R in the recording medium M. By such a configuration, the light which was emitted from the light source 253 and goes toward the recording medium M is narrowed to a part of the light by the light-blocking part 251, and only a part of the light which passed through the slit 251a enters the reading range R in the recording medium M. The light reflected at the surface of the recording medium M does not enter the line sensor 255 from the portion other than the slit 251a. As a result, since the incident amount to the line sensor 255 of the light which was reflected outside the reading range R in the recording medium M is reduced, it is possible to suppress the influence of the image which was recorded outside the reading range R in the recording medium M, and read the image more appropriately.

The slit 251a is provided over a recording possible width of the image in the X direction (predetermined width direction) in the recording medium M. As a result, since the light passing through the slit 251a enters the entire image in the width direction, it is possible to read the entire image in the width direction by the line sensor 255.

The line sensor 255 is a line sensor which is provided along the extending direction of the slit 251a. Thus, it is possible to detect the light which passes through the slit 251a extending in the width direction and efficiently read the image in the reading range R.

The image reading section 25 also includes a reflection plate 252 which has a light reflection surface that reflects at least a part of the light and reflected light so as to enter the slit 251a, the light being emitted from the light source 253 and the reflected light being reflected light at the light-blocking part 251 of the light. By such a configuration, since the amount of light which passes through the slit 251a and enters the surface of the recording medium M can be increased, it is possible to improve the rate of light used for reading by the image reading section 25 in the light which was emitted from the light source 253. Though the amount of light going toward the region S outside the reading range R in the recording medium M is increased in the image reading section 25 including the reflection plate 252, this light can be blocked by providing the light-blocking part 251. Thus, it is possible to effectively suppress the influence of the image recorded in the region S, and appropriately read the image.

Conventionally, in a case of reading an image recorded on a recording medium M having concavities and convexities on the surface, reading has been performed by directly emitting light from the light source to the recording medium M at a predetermined incident angle without using the reflection plate 252 described above. In such a method, there has been a problem that information regarding brightness of the recorded image cannot be appropriately acquired since dark portions are generated in the obtained image capturing data due to the shades of the concavities and convexities of the recording medium M according to the incident angle.

On the other hand, in the image reading section 25 in the embodiment having the above features, the light entering the surface of the recording medium M has various incident angles since the light reflected at the light reflection surface of the reflection plate 252 enters the surface of the recording medium M. As a result, since the dark portions due to the shades of the concavities and convexities in the surface of the recording medium M are not easily generated in the image capturing data by the image reading section 25, it is possible to more accurately acquire the information regarding the brightness of the image which was recorded on the recording medium M.

The light-blocking part 251 diffusely reflects the light entering the surface (upper surface) of the light-blocking part 251, the surface being on a side opposite to the side facing the recording medium M. By such a configuration, it is possible to reflect the light, which entered the upper surface of the light-blocking part 251 and was diffusely reflected, with the reflection plate 252 to reuse the light, and cause a part of the light to enter the slit 251a. Thus, it is possible to improve the use efficiency of light which was emitted from the light source 253. Since light can enter the surface of the recording medium M at more various incident angles, it is possible to more suppress the generation of shades due to the concavities and convexities in the surface of the recording medium M.

The light reflection surface of the reflection plate 252 diffusely reflects the incident light. Thus, since the light can enter the surface of the recording medium M at more various incident angles, it is possible to more suppress the generation of shades due to the concavities and convexities in the surface of the recording medium M.

The reflection plate 252 has a light reflection surface which is arched in a cross section perpendicular to the extending direction of the slit 251a. Thus, it is possible to cause the reflected light at the light reflection surface of the reflection plate 252 to enter the slit 251a at various incident angles. Thus, the dark portions due to the shades of concavities and convexities in the surface of the recording medium M are not easily generated in the image capturing data by the image reading section 25, and it is possible to more accurately acquire the information regarding the brightness of the image which was recorded on the recording medium M. Since the light can enter the surface of the recording medium M at more various incident angles, it is possible to more suppress the generation of shades due to the concavities and convexities in the surface of the recording medium M.

The width L of the slit 251a in the direction orthogonal to the extending direction of the slit 251a is less than twice the distance D which is a distance between the recording medium M and the end of the slit 251a in the light-blocking part 251, the end being on a side opposite to the recording medium M.

The shades generated by the concavities and convexities of the recording medium M are especially remarkable in a case where the light enters at a large incident angle to the recording medium M. Thus, by the above described configuration of satisfying the relationship of L<2D, the incident angle θ of the light passing through the slit 251a and entering the central portion in the Y direction of the reading range R in the recording medium M is less than 45 degrees. As a result, it is possible to more suppress the generation of shades of the concavities and convexities of the recording medium M and more accurately acquire the brightness of the image recorded on the recording medium M.

The reflection plate 252 has the opening 252a through which the reflected light from the reading range passes, and the line sensor 255 detects the intensity of the light which passed through the opening 252a and entered the line sensor 255. By such a configuration, it is possible to use, for reading, the reflected light near the opening 252a in the reflection plate 252. Since the reflected light has a small incident angle to the recording medium M and does not easily generate the shades due to the concavities and convexities in the surface of the recording medium M, it is possible to more suppress the generation of shades due to the concavities and convexities in the surface of the recording medium M by reusing such light so as to be used for reading.

The recording medium M having an image which is a target to be read includes a recording medium M which has concavities and convexities that are readable by the line sensor 255. Though the line sensor 255 reads the concavities and convexities and the shades thereof in the surface of the recording medium M by such a configuration, by the reflection plate 252 causing the light to enter at various incident angles to the recording medium M, it is possible to suppress the generation of the shades due to the concavities and convexities and more accurately acquire the information regarding the brightness of the image which was recorded on the recording medium M.

The recording medium M having concavities and convexities which are readable by the line sensor 255 is fabric and embossed paper. Though the concavities and convexities and the shades thereof in the surface are normally read by the line sensor 255 since the fabric and the embossed paper have large concavities and convexities on the surface, according to the inkjet recording device 1 of the present invention having the reflection plate 252, it is possible to suppress the generation of shades due to the concavities and convexities and more accurately acquire the information regarding the brightness of the image which was recorded on the recording medium M.

The image-reading device includes a conveyance belt 213 that has a placement surface on which the recording medium M is placed at least while the image is read by the line sensor 255, and the placement surface is white. By such a configuration, since the reflection rate on the placement surface of the light which was transmitted through the concavity of the recording medium M can be raised in a case where the recording medium M has concavities and convexities, it is possible to suppress the defect that the brightness of the concavity is lower than the brightness of the convexity and the portion corresponding to the concavity appears as a dark portion in the reading result by the image reading section 25.

The inkjet recording device 1 in the embodiment includes: a head unit 23 which ejects ink to the recording medium M; a CPU 41 as a recording control section which causes the head unit 23 to eject ink to the recording medium M and record an image; the above image reading section 25; and a conveyance section 21 which moves the recording medium M and the reading range R relative to each other, and the CPU 41 causes the image reading section 25 to read the image while causing the conveyance section 21 to move the recording medium M and the reading range R relative to each other (reading control section). By such a configuration, it is possible to suppress the influence of the image which was recorded outside the reading range R in the recording medium M having the image recorded by the head unit 23, and more appropriately read the image by the image reading section 25.

The conveyance section 21 includes a conveyance belt 213 that has a placement surface on which the recording medium M is placed at least while the image is read by the line sensor 255, and the placement surface is white. By such a configuration, it is possible to suppress the defect that the brightness of the concavity is lower than the brightness of the convexity and the portion corresponding to the concavity appears as a dark portion in the reading result by the image reading section 25.

The CPU 41 corrects the image data of the image to be recorded on the recording medium M on the basis of the reading result of a predetermined test image by the image reading section 25 (correction section). Thus, it is possible to supplement the irregularities of the ejection amounts of ink in the head unit 23 and record an appropriate image.

### (Modification example)

Next, a modification example in the embodiment will be described.

The modification example is different from the above embodiment in that the light which was emitted from the light source in the image reading section is directly emitted to the light-blocking part 251 and the recording medium M. Since the modification example is similar to the above embodiment in the other respects, hereinafter, the difference from the embodiment will be described.

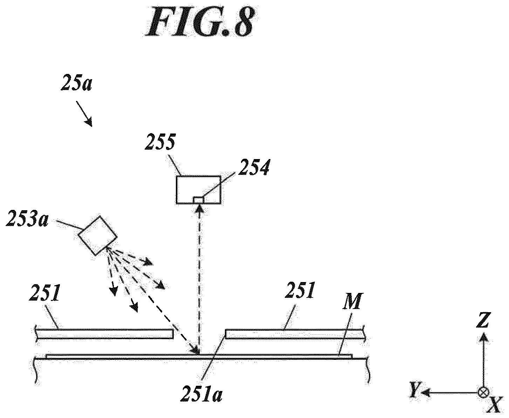

FIG. 8 is a schematic cross-sectional view on the surface perpendicular to the X direction of the image reading section 25a according to the modification example.

In the image reading section 25a, the light source 253a which is formed of diffuse lighting that emits light to a wide range is disposed obliquely above the slit 251a in the YZ plane. A part of the light which was emitted from the light source 253a passes through the slit 251a to directly enter the surface of the recording medium M, and the light which passed through the slit 251a from among the reflected light enters the image capturing element 254 of the line sensor 255. In the image reading section 25a in the modification example having such a configuration, the reflected light of the light which entered the surface of the recording medium M from the light source 253a is not emitted from the portion other than the slit 251a, and thus, it is possible to suppress the influence by the image which was recorded outside the reading range R in the recording medium M, and appropriately read the image.

In the modification example, a plurality of light sources 253a may be provided. As the light source 253a, there may be used highly directional lighting that has a narrow emission range of emitted light instead of diffuse lighting.

The present invention is not limited to the above embodiment and modification example, and various changes can be made.

For example, though the embodiment and modification example have been described by using an example in which the slit 251a of the light-blocking part 251 is formed by providing an opening in the light-blocking part 251, the embodiment of the slit is not limited to this. For example, the slit may be formed by providing a cut-off portion from the end of the light-blocking part or may be formed by space in a case where the light-blocking part is formed of a plurality of light blocking members which are disposed to be spaced.

Though the embodiment and modification example have been described by using an example in which the slit 251a is provided in a region covering the reading range R when seen from the direction (Z direction) perpendicular to the surface of the light-blocking part 251, the present invention is not limited to this. The slit 251a may not be necessarily provided so as to cover the reading range R when seen from the Z direction as long as the slit 251a is provided at a position such that the reflected light of the light which passed through the slit 251a and entered the reading range R in the recording medium M passes through the slit 251a and enters the line sensor 255. For example, in a case where the recording medium M has a directional scattering property, adjustment may be performed to have a positional relationship such that the reading rang R and the slit 251a partially do not overlap each other when seen from the Z direction according to the directional scattering property.

Though the embodiment and modification example have been described by using an example in which the light-blocking part 251 is a plate-like member, the configuration of the light-blocking part 251 is not limited to this, and may be a member which has different thicknesses in the Z direction according to the position in the X direction and/or Y direction, for example.

Though the embodiment and modification example have been described by taking, as an example of the light reflection section, the reflection plate 252 the inner surface of which is arched in the cross-section on the plane perpendicular to the X direction, the configuration of the light reflection section is not limited to this. For example, the inner surface of the light reflection section in the cross-section may have a concave shape other than the arch shape, and the inner surface in the cross section may be a part of a polygon, for example. The reflection plate 252 may not form the enclosed space with the light-blocking part 251, and may be a plate-like light reflection plate which is provided at a position reflecting the light from the light source to the light-blocking part 251, for example.

Though the embodiment and modification example have been described by using an example in which the opening 252a as the light passing section is provided to the reflection plate 252 as the light reflection section, the embodiment of the light passing section is not limited to this. For example, the light passing section may be formed by providing a cut-off portion from the end of the reflection plate 252, or may be formed by space in a case where the light reflection section is formed of a plurality of reflection plates which are disposed to be spaced.

Though the embodiment and modification example have been described by using, as an embodiment of correction of the image data, an example of correcting the image data so as to solve the irregularities in the ink ejection amounts of the respective recording heads 232 by recording and reading the test image 60 including the gradation patterns 61, the present invention is not limited to this. For example, the image data may be corrected by recording, as the test image, a line pattern formed of a plurality of lines each of which was recorded by a single recording element, specifying the recording element having an ink ejection defect from the reading result and correcting the image data so as to supplement the ejection defect.

Though the embodiment and modification example have been described by using an example of reading the image by the image reading section 25 while conveying the recording medium M by the conveyance section 21 as the movement section, the present invention is not limited to this. For example, image reading may be performed by fixing the position of the recording medium M and moving the image reading section 25 with respect to the recording medium M with the movement section. The image reading may be performed by alternately performing a main scanning operation and a sub-scanning operation, the main scanning operation being the operation of fixing the position of the recording medium M and reading the image while moving the image reading section 25 in the main scanning direction with respect to the recording medium M with the movement section, and the sub-scanning operation being the operation of moving the recording medium M in the sub-scanning direction with the movement section.

Though the embodiment and modification example have been described by using an example of conveying the recording medium M by the conveyance section 21 which includes a conveyance belt 213, the present invention is not limited to this, and the conveyance section 21 may be a conveyance section which conveys the recording medium M by placing the recording medium M on the outer circumferential surface (placement surface) of a rotating conveyance drum, for example. In this case, the image reading section 25 is configured to be disposed near the outer circumferential surface of the conveyance drum and read the image which was recorded on the recording medium M being conveyed by the conveyance drum.

Though the embodiment and modification example have been described by taking an example of using the line sensor 255 as the reading means, an area sensor may be used instead of this, for example.

Though the embodiment and modification example have been described by taking, as an example, the inkjet recording device 1 of the single-pass system, the present invention may be applied to the inkjet recording device which performs image recording while the recording head is scanning.

Though several embodiments of the present invention have been described, the scope of the present invention is not limited to the above-mentioned embodiments, and includes the scope of inventions, which is described in the scope of claims.

### INDUSTRIAL APPLICABILITY

The present invention is applicable in an image-reading device and an inkjet recording device.

### EXPLANATION OF REFERENCE NUMERALS

- 1: inkjet recording device
- 2: external apparatus
- 10: sheet feeding section
- 11: sheet feeding tray
- 12: medium feeding section
- 13: passing drum
- 20: image recording section
- 21: conveyance section
- 211,212: conveyance roller
- 213: conveyance belt
- 22: heating section
- 23: head unit
- 231: recording head drive section
- 232: recording head
- 24: fixing section
- 25, 25a: image reading section
- 251: light-blocking part
- 251a: slit
- 252: reflection plate
- 252a: opening
- 253, 253a: light source
- 254: image capturing element
- 255: line sensor
- 257: substrate
- 30: sheet ejection section
- 31: passing drum
- 32: delivery section
- 33: sheet ejection tray
- 40: control section
- 41: CPU
- 42: RAM
- 43: ROM
- 44: storage section
- 51: conveyance drive section
- 52: operation display section
- 53: interface
- 54: bus
- 60: test image
- M: recording medium
- R: reading range

## Claims

1. An image-reading device (25) for reading an image by moving a recording medium (M) and a reading range (R) relative to each other, the recording medium (M) having the image recorded thereon and the reading range (R) being a range in which a part of the image is read, the device comprising:
a light source (253);
a light-blocking part (251) which blocks light that is emitted from the light source (253) and goes toward the recording medium (M); and
a reading means (255) which reads the image recorded on the recording medium (M) by detecting light that passes through a slit (251a) provided in the light-blocking part (251) from among reflected light of light that is emitted from the light source (253), passes through the slit (251a) and enters the reading range (R) in the recording medium (M),
**characterized in that** a width (L) of the slit (251a) in a direction orthogonal to the extending direction of the slit (251a) is less than twice a distance (D) between the recording medium (M) and an end of the slit (251a) in the light-blocking part (251), the end being on a side opposite to a side facing the recording medium (M).

2. The image-reading device (25) according to claim 1, wherein the slit (251a) is provided over a recording possible width of the image in a predetermined width direction in the recording medium (M).

3. The image-reading device (25) according to claim 1 or 2, wherein the reading means (255) is a line sensor which is provided along an extending direction of the slit (251a).

4. The image-reading device (25) according to any one of claims 1 to 3, further comprising a light reflection section (252) which has a light reflection surface that reflects at least a part of light and reflected light so as to enter the slit (251a), the light being emitted from the light source (253) and the reflected light being reflected light at the light-blocking part (251) of the light.

5. The image-reading device (25) according to claim 4, wherein the light-blocking part (251) diffusely reflects light which enters a surface of the light-blocking part (251), the surface being on a side opposite to a side facing the recording medium (M).

6. The image-reading device (25) according to claim 4 or 5, wherein the light reflection surface of the light reflection section (252) diffusely reflects incident light.

7. The image-reading device (25) according to any one of claims 4 to 6, wherein, in the light reflection section (252), the light reflection surface is concave in a cross section perpendicular to the extending direction of the slit (251a).

8. The image-reading device (25) according to any one of claims 4 to 7, wherein
the light reflection section (252) has a light passing section (252a) through which reflected light from the reading range (R) passes, and
the reading means (255) detects an intensity of light which passes through the light passing section (252a) and enters the reading means (255).

9. The image-reading device (25) according to any one of claims 1 to 8, wherein the recording medium (M) having the image which is a target to be read includes a recording medium (M) which has a concavity and a convexity readable by the reading means (255).

10. The image-reading device (25) according to claim 9, wherein the recording medium (M) which has the concavity and the convexity readable by the reading means (255) is fabric and embossed paper.

11. The image-reading device (25) according to any one of claims 1 to 10, further comprising a placement section (213) that has a placement surface on which the recording medium (M) is placed at least while the image is read by the reading means (255), wherein the placement surface is white.

12. An inkjet recording device (1), comprising:
a recording section (23) which ejects ink to a recording medium (M);
a recording control section (41) which causes the recording section (23) to eject ink to the recording medium (M) and record an image;
the image-reading device (25) according to any one of claims 1 to 10;
a movement section (21) which moves the recording medium (M) and the reading range (R) relative to each other; and
a reading control section (41) which causes the image-reading device (25) to read the image while causing the movement section (21) to move the recording medium (M) and the reading range (R) relative to each other.

13. The inkjet recording device (1) according to claim 12, wherein
the movement section (21) includes a placement section (213) that has a placement surface on which the recording medium (M) is placed at least while the image is read by the reading means (255), and
the placement surface is white.

14. The inkjet recording device (1) according to claim 12 or 13, further comprising a correction section (41) which corrects image data of an image to be recorded on the recording medium (M) based on a reading result of a predetermined test image (60) by the image-reading device (25).

## Patentansprüche

1. Bildlesevorrichtung (25) zum Lesen eines Bildes durch Bewegen eines Aufzeichnungsmediums (M) und eines Lesebereichs (R) relativ zu einander, wobei das Aufzeichnungsmedium (M) ein darauf aufgezeichnetes Bild hat, und wobei der Lesebereich (R) ein Bereich ist, in dem ein Teil des Bildes gelesen wird, wobei die Vorrichtung umfasst:
eine Lichtquelle (253);
einen Lichtblockierteil (251), der Licht blockiert, das von der Lichtquelle (253) emittiert wurde und hin zu dem Aufzeichnungsmedium (M) geht; und
einem Leseteil (255), der das Bild, das auf dem Aufzeichnungsmedium aufgezeichnete Bild liest, in dem Licht detektiert wird, das durch einen Schlitz (251a) läuft, welcher in dem Lichtblockierteil (251) vorgesehen ist, von reflektiertem Licht von dem Licht, das von der Lichtquelle (253) emittiert wurde, durch den Schlitz (251a) läuft und in den Lesebereich (R) in dem Aufzeichnungsmedium (M) eintritt;
**dadurch gekennzeichnet, dass** eine Breite (L) des Schlitzes (251a) in einer Richtung senkrecht zu der Ausdehnungsrichtung des Schlitzes (251a) kleiner als der doppelte Abstand (D) zwischen dem Aufzeichnungsmedium (M) und einem Ende des Schlitzes (251a) in dem Lichtblockierteil (251) ist, wobei das Ende an einer Seite gegenüberliegend der Seite ist, welche dem Aufzeichnungsmedium (M) gegenüberliegt.

2. Bildlesevorrichtung (25) nach Anspruch 1, wobei der Schlitz (251a) über eine Breite der möglichen Aufzeichnung des Bildes in einer vorgegebenen Breitenrichtung des Aufzeichnungsmediums (M) vorgesehen ist.

3. Bildlesevorrichtung (25) nach Anspruch 1 oder 2, wobei das Lesemittel (255) ein Liniensensor ist, der entlang der Ausdehnungsrichtung des Schlitzes (251a) vorgesehen ist.

4. Bildlesevorrichtung (25) nach einem der Ansprüche 1 bis 3, des Weiteren mit einem Lichtreflektierabschnitt (252), der eine lichtreflektierende Oberfläche hat, welche zumindest einen Teil des Lichts und des reflektierten Lichts reflektiert, so dass diese in den Schlitz (251a) eintreten, wobei das Licht von der Lichtquelle (253) emittiert wird und wobei das reflektierte Licht an den Lichtblockierteil (251) reflektiertes Licht des Lichts ist.

5. Bildlesevorrichtung (25) nach Anspruch 4, bei der der Lichtblockierteil (251) die diffus Licht reflektiert, welches in eine Oberfläche des Lichtblockierteils (251) eintritt, wobei die Oberfläche an einer Seite gegenüberliegend einer Seite ist, die dem Aufzeichnungsmedium (M) gegenüberliegt.

6. Bildlesevorrichtung (25) nach Anspruch 4 oder 5, bei der die Lichtreflektionsoberfläche des Lichtreflektionsabschnitts (253) einfallendes Licht diffus reflektiert.

7. Bildlesevorrichtung (25) nach einem der Ansprüche 4 bis 6, bei der in dem Lichtreflektionsabschnitt (252) die Lichtreflektionsoberfläche konkav in einem Querschnitt senkrecht zu der Ausdehnungsrichtung des Schlitzes (251a) ist.

8. Bildlesevorrichtung (25) nach einem der Ansprüche 4 bis 7, bei der
der Lichtreflektionsabschnitt (252) einen Lichtdurchlassabschnitt (252a) hat, durch den reflektiertes Licht von dem Lesebereich (R) durchläuft, und wobei das Lesemittel (255) eine Intensität des Lichts, welches durch den Lichtdurchlassabschnitt (252a) läuft und in das Lesemedium (255) eintritt, erfasst.

9. Bildlesevorrichtung (25) nach einem der Ansprüche 1 bis 8, bei der das Aufzeichnungsmedium (M) mit dem aufgezeichneten Bild, das Ziel des Lesens ist, ein Aufzeichnungsmedium (M) enthält, das eine Konkavität und eine Konvexität hat, die durch das Lesemittel (255) lesbar sind.

10. Bildlesevorrichtung (25) nach Anspruch 9, bei dem der Aufzeichnungsmedium (M) mit der Konkavität und der Konvexität, die für das Lesemittel (255) lesbar sind, ein Gewebe und geprägtes Papier ist.

11. Bildlesevorrichtung (25) nach einem der Ansprüche 1 bis 10, des Weiteren mit einem Platzierabschnitt (213), der eine Platzieroberfläche hat, auf der das Aufzeichnungsmedium (M) platziert wird, zumindest während das Bild durch das Lesemittel (255) gelesen wird, wobei die Platzieroberfläche weiß ist.

12. Tintenstrahlaufzeichnungsvorrichtung (1) mit:
einem Aufzeichnungsabschnitt (23), der Tinte auf ein Aufzeichnungsmedium (M) ausstößt;
einem Aufzeichnungssteuerabschnitt (41), der verursacht, dass der Aufzeichnungsabschnitt (23) Tinte auf das Aufzeichnungsmedium (M) ausstößt und ein Bild aufgezeichnet wird;
einer Bildlesevorrichtung (25) nach einem der Ansprüche 1 bis 10;
einem Bewegungsabschnitt (21), der das Aufzeichnungsmedium (M) und den Lesebereich (R) relativ zu einander bewegt; und
einen Lesesteuerabschnitt (41), der verursacht, dass die Bildlesevorrichtung (25) das Bild liest, während es den Bewegungsabschnitt (21) veranlasst, das Aufzeichnungsmedium (M) und den Lesebereich (R) relativ zu einander zu bewegen.

13. Tintenstrahlaufzeichnungsvorrichtung (1) nach Anspruch 12, wobei der
Bewegungsabschnitt (21) einen Platzierabschnitt (231) enthält, der eine Platzieroberfläche hat, auf der das Aufzeichnungsmedium (M) zumindest während des Lesens des Bildes durch das Lesemittel (255) platziert wird, und
wobei die Platzieroberfläche weiß ist.

14. Tintenstrahlaufzeichnungsvorrichtung (1) nach Anspruch 12 oder 13, des Weiteren mit einem Korrekturabschnitt (41), der Bilddaten auf einen aufzuzeichnenden Bild auf dem Aufzeichnungsmedium (M) beruhend auf einem Leseergebnis eines vorgegebenen Testbilds (60) durch die Bildlesevorrichtung (25) korrigiert.

## Revendications

1. Un dispositif de lecture d'image (25) pour lire une image par déplacement d'un support d'enregistrement (M) et d'une plage de lecture (R) l'un par rapport à l'autre, le support d'enregistrement (M) ayant l'image enregistrée sur celui-ci et la plage de lecture (R) étant une plage dans laquelle une partie de l'image est lue, le dispositif comprenant :
- une source de lumière (253) ;
- une partie de blocage de la lumière (251) qui bloque la lumière émise par la source de lumière (253) et s'étend vers le support d'enregistrement (M); et
- un moyen de lecture (255) qui lit l'image enregistrée sur le support d'enregistrement (M) par détection de la lumière qui passe par une fente (251a) ménagée dans la partie de blocage de la lumière (251) parmi la lumière réfléchie émise par la source de lumière (253) qui a traversé la fente (251a) et est incidente sur la plage de lecture (R) du support d'enregistrement (M),
**caractérisé en ce que** la largeur (L) de la fente (251a) selon une direction orthogonale à la direction d'extension de la fente (251a) est inférieure à deux fois la distance (D) entre le support d'enregistrement (M) et une extrémité de la fente (251a) dans la partie de blocage de la lumière (251), l'extrémité étant sur une face opposée à une face tournée vers le support d'enregistrement (M).

2. Le dispositif de lecture d'image (25) selon la revendication 1, dans lequel la fente (251a) est ménagée sur une largeur possible d'enregistrement de l'image dans une direction de la largeur prédéterminée dans le support d'enregistrement (M).

3. Le dispositif de lecture d'image (25) selon la revendication 1 ou 2, dans lequel le moyen de lecture (255) est un capteur de ligne qui est prévu dans une direction d'extension de la fente (251a).

4. Le dispositif de lecture d'image (25) selon l'une quelconque des revendications 1 à 3, comprenant en outre une section de réflexion de la lumière (252) qui comporte une surface de réflexion de la lumière qui réfléchit au moins une partie de la lumière et de la lumière réfléchie de manière à traverser la fente (251a), la lumière étant émise par la source de lumière (253) et la lumière réfléchie étant de la lumière réfléchie par la zone d'obturation de lumière (251).

5. Le dispositif de lecture d'image (25) selon la revendication 4, dans lequel la partie de blocage de la lumière (251) réfléchit de manière diffuse la lumière qui pénètre dans une surface de la partie de blocage de la lumière (251), la surface étant sur une face opposée au support d'enregistrement (M).

6. Le dispositif de lecture d'image (25) selon la revendication 4 ou 5, dans lequel la surface de réflexion de lumière de la section de réflexion de lumière (252) réfléchit de manière diffuse la lumière incidente.

7. Le dispositif de lecture d'image (25) selon l'une quelconque des revendications 4 à 6, dans lequel, dans la section de réflexion de la lumière (252), la surface de réflexion de la lumière est concave dans une section transversale perpendiculaire à la direction d'extension de la fente (251a).

8. Le dispositif de lecture d'image (25) selon l'une quelconque des revendications 4 à 7, dans lequel
- la section de réflexion de lumière (252) présente une section de passage de lumière (252a) à travers laquelle passe la lumière réfléchie provenant de la plage de lecture (R), et
- le moyen de lecture (255) détecte une intensité de lumière qui passe par la section de passage de la lumière (252a) et pénètre dans le moyen de lecture (255).

9. Le dispositif de lecture d'image (25) selon l'une quelconque des revendications 1 à 8, dans lequel le support d'enregistrement (M) comportant l'image qui est une cible à lire comprend un support d'enregistrement (M) qui a une concavité et une convexité lisible par les moyens de lecture (255).

10. Le dispositif de lecture d'image (25) selon la revendication 9, dans lequel le support d'enregistrement (M) qui présente la concavité et la convexité lisibles par le moyen de lecture (255) est en tissu et en papier gaufré.

11. Le dispositif de lecture d'image (25) selon l'une quelconque des revendications 1 à 10, comprenant en outre une section de positionnement (213) qui comporte une surface de positionnement sur laquelle le support d'enregistrement (M) est disposé au moins pendant que l'image soit lue par le moyen de lecture (255), dans lequel la surface de positionnement est blanche.

12. Le dispositif d'enregistrement à jet d'encre (1), comprenant :
- une section d'enregistrement (23) qui éjecte de l'encre sur un support d'enregistrement (M);
- une section de commande d'enregistrement (41) qui amène la section d'enregistrement (23) à éjecter de l'encre sur le support d'enregistrement (M) et à enregistrer une image;
- le dispositif de lecture d'image (25) selon l'une quelconque des revendications 1 à 10;
- une section de mouvement (21) qui déplace le support d'enregistrement (M) et la plage de lecture (R) l'un par rapport à l'autre; et
- une section de commande de lecture (41) qui amène le dispositif de lecture d'image (25) à lire l'image tout en obligeant la section de mouvement (21) à déplacer le support d'enregistrement (M) et la plage de lecture (R) l'un par rapport à l'autre.

13. Dispositif d'enregistrement à jet d'encre (1) selon la revendication 12, dans lequel
- la section de mouvement (21) comprend une section de positionnement (213) qui présente une surface de positionnement sur laquelle le support d'enregistrement (M) est disposé au moins pendant la lecture de l'image par le moyen de lecture (255), et
- la surface de placement est blanche.

14. Le dispositif d'enregistrement à jet d'encre (1) selon la revendication 12 ou 13, comprenant en outre une section de correction (41) qui corrige les données d'image d'une image à enregistrer sur le support d'enregistrement (M) basée sur un résultat de lecture d'une image test (60) prédéterminée par le dispositif de lecture d'image (25).
